# EUROPÄISCHE PATENTANMELDUNG

(11) **EP 1 241 775 A2**
(43) Veröffentlichungstag der Anmeldung: **18.09.2002**
(21) Anmeldenummer: 02004068.9
(22) Anmeldetag: 23.02.2002
(51) Int. Cl.: H02M 3/158

(54) **Schaltender Spannungsumformer**

(30) Priorität: 13.03.2001 DE 10111913
(71) Anmelder: Semikron Elektronik GmbH, D-90253 Nürnberg (DE)
(72) Erfinder: Zametzky, Klaus, 91126 Schwabach (DE)

(57) **Zusammenfassung**

Die Erfindung betrifft schaltender Spannungsumformer in Halbbrückentopologie wie z. B. Schaltnetzteile, DC/DC- Umsetzer oder Class- D- Verstärker (im Schaltbetrieb arbeitende Verstärker) mit variabler Verriegelung bestehend aus zwei Leistungsschaltern, einem Stellglied sowie einer Ansteuerung. Hierbei werden der TOP- Schalter (4) durch einen oder mehrere N- Kanal Transistoren (14), sowie der BOT- Schalter (5) durch einen oder mehrere P- Kanal Transistoren (18) realisiert. Der Ausgang Upwm der Halbbrücke wird als im Betrieb variierendes, nicht konstantes, Bezugspotential für Ansteuerung (17) und Versorgungsspannung (Ubtop, Ubbot) der jeweiligen Treiber (12, 13) des TOP- bzw. BOT-Schalters gewählt.

## Beschreibung

Die Erfindung betrifft schaltende Spannungsumformer in Halbbrückentopologie, wie z. B. Schaltnetzteile, DC/DC- Umsetzer oder Class- D- Verstärker (im Schaltbetrieb arbeitende Verstärker). Schaltende Spannungsumformer wie primärgetaktete Schaltnetzteile oder DC/DC- Umsetzer dienen dazu Spannungen und Ströme potentialgetrennt zu transformieren. Kernstück der Ausgestaltungen der genannten Umsetzer oder Umformer ist ein Hochfrequenztransformator, der die Energie potentialgetrennt überträgt.

Primärgetaktete Schaltnetzteile sowie DC/DC- Umsetzer werden weltweit in sehr großen Stückzahlen gefertigt. Sie finden Verwendung in der Industrieelektronik, Weißer Ware, in Produkten der Unterhaltungselektronik und auch in Personalcomputern und Einrichtungen für die Telekommunikation.

Für schaltende Spannungsumformer sind folgende Eigenschaften von besonderer Bedeutung
- hoher Wirkungsgrad und damit verbundene geringe Wärmeentwicklung
- kompakter Aufbau
- geringes Gewicht
- gute Qualität der Ausgangsspannung
- günstiger Preis
- hohe Zuverlässigkeit
- möglichst geringe Anzahl von Bauteilen

Zum Stand der Technik zählen verschiedene Wandlerprinzipien. Es wird prinzipiell unterschieden zwischen zwei Grundtypen, den Sperr- und den Durchflusswandlern, diese sind beispielhaft beschrieben in Tietze / Schenk, Kap 18 (ISBN3-540-19475-4, 9. Auflage). Durchflusswandler gelten als vorteilhafter Stand der Technik, da sie neben hohem Wirkungsgrad auch eine gute Qualität der Ausgangsspannung (z.B. bei Gleichspannungsquellen eine geringe Restwelligkeit der Ausgangsspannung) liefern.

Zur Realisierung kompakter Anordnungen mit geringem Gewicht wird ein Durchflußwandlerprinzip gewählt werden, das bei einem gegebenen Hochfrequenztransformator möglichst viel Leistung übertragen kann. Sinnvoll ist es die benötigte Leistung durch einen möglichst kleinen Kern zu übertragen, da dieser Kostenvorteile mit sich bringt und die gesamte Schaltungsanordnung kompakter realisiert werden kann.

Gegentaktwandler beispielsweise erfüllen diese Forderungen, da sie im Vergleich zu Eintaktwandlern prinzipbedingt bei sonst gleichen Bedingungen circa die doppelte Leistung durch einen gegeben Magnetkern transportieren können. Die durch einen Magnetkern übertragbare maximale Leistung ist weiterhin noch von der Wickelraumausnutzung des Transformators abhängig. Optimale Wickelraumausnutzung wird durch Wandler in Halb- oder Vollbrückentopologie gewährleistet, da sie nur eine Primärwicklung benötigen, die in allen Phasen der magnetischen Flußbildung stromführend ist.

Zur Regelung der Ausgangsspannung beispielsweise eines Halbbrückenwandlers findet eine Ansteuerung des Pulsweitenmodulators (PWM) Verwendung, bei der das Tastverhältnis abhängig von einer Stellgröße regelbar gestaltet werden muss. Weiterhin ist ein Gleichlauf zwischen dem Tastverhältnis beider Schalter einer Halbbrückenanodnung erforderlich um eine Wechselspannung ohne Gleichanteil am Ausgang der Halbbrücke zu erzeugen.

Die beiden Schalter der Halbbrückenanordnung werden nach dem Stand der Technik durch zwei N- Kanal- Transistoren realisiert. Die Ansteuerung des Pulsweitenmodulators erzeugt zwei Signale derart, dass zur Vermeidung von Kurzschlüssen immer nur einer der beiden Schalter geschlossen ist, man spricht von gegeneinander verriegelten Ansteuersignalen. Bei einer Vielzahl von Anwendungen ist die Versorgungs- bzw. Zwischenkreisspannung größer als die Arbeitsspannung des Pulsweitenmodulators.

Der Pulsweitenmodulator nach dem Stand der Technik kann realisiert werden durch eine Spannungsquelle, die eine dreieck- oder sägezahnförmige Spannung erzeugt, diese wird durch einen Komparator mit einer Stellspannung verglichen, ein D- Flip- Flop steuert zwei UND- Gatter und gibt abwechselnd das Einschaltsignal für die beiden mit Treibern ausgestatteten Schalter der Halbbrückenanodnung frei. (Tietze / Schenk, Kap. 18.7.5)

Dem Vorteil der Halbbrückenwandlertopologie, dass ein im Vergleich zu anderen Topologien kleiner HF- Trafo Verwendung finden kann steht als Nachteil der schaltungstechnische Aufwand für die Ansteuerung der Schalter der Halbbrücke gegenüber.

Es ist hierbei erforderlich zwei getrennte Signale, jeweils eines für den Schalter in TOP Position bzw. eines für den Schalter in BOT- Position zu erzeugen, diese beiden Signale müssen gegeneinander verriegelt sein sowie gleiche Impulslängen aufweisen.

Da weiterhin eine Vielzahl von Anwendungen eine Versorgungs- bzw. Zwischenkreisspannung aufweisen, die größer als die Arbeitsspannung des Pulsweitenmodulators ist, sowie das Bezugspotential des Pulsweitenmodulators auf dem Bezugspotential des BOT- Schalters liegt, ist zusätzlich noch eine aufwendige Potentialanpassung (Level- Shift) zur Ansteuerung des TOP- Schalters notwendig.

Damit vergrößert sich der schaltungstechnische Aufwand noch um einen Level- Shifter zur Pegelanpassung des Ansteuersignals für den TOP- Schalter der Halbbrückenanordnung. Derartige Level- Shifter bedeuten nicht nur konstruktiven sondern auch einen zusätzlichen finanziellen Aufwand.

Es sind integrierte Bausteine für die Erzeugung der pulsweitenmodulierten Signale am Markt verfügbar. Bei Versorgungs- bzw. Zwischenkreisspannung größer als die Arbeitsspannung der Pulsweitenmodulator- Steuerschaltung, besteht dennoch ein erheblicher Aufwand für die Ansteuerung des Leistungsschalters in TOP- Position.

Aufgrund dieses schaltungstechnischen Aufwandes wird diese Halbbrückentopologie nur in speziellen, diese Technologie erfordernden Wandlern oder in Wandlern größerer Leistung eingesetzt.

Zum Stand der Technik zählt auch die DE 33 11 662, in der eine Schaltungsanordnung zur Verwendung in einem elektromagnetischen Strömungsmesser vorgesehen ist,. sowie die JP 632 537 20. Diese beiden Schaltungsanordnungen erfüllt nicht die Aufgaben dieser Erfindung, da sie eine Halbbrückenanordnung mit konstanter Verriegelungszeit vorstellen.

Der Grund für diese konstante Verriegelung liegt in der Ansteuerung des TOP- und des BOT- Schalters durch einen Treiber.

Der Erfindung liegt die Aufgabe zugrunde bei schaltenden Spannungsumformern mit variabler Verriegelung in Halbbrückentopologie den schaltungstechnischen Aufwand für die Ansteuerung der Halbbrücke erheblich zu verringern wobei auch die beim Stand der Technik zum Teil notwendige Verwendung einer Pegelanpassung (Level- Shift) bei Versorgungs- bzw. Zwischenkreisspannungen größer als die Arbeitsspannung der Pulsweitenmodulator- Ansteuerschaltung vermieden wird.

Die Aufgabe wird erfindungsgemäß gelöst, durch die Merkmale des Anspruchs 1. Bevorzugte Ausführungsformen sind in den Unteransprüchen beschrieben.

Im Gegensatz zum Stand der Technik wird bei der erfinderischen Lösung ein P- Kanal Transistor (z. B. ein MOS- Tranistor, ein Bipolartyp oder ein IGBT (insulated gate bipolar transistor)) als BOT- Schalter eingesetzt, dies entspricht einer sog. Source- bzw. Emitter-Folger Ausführung. Die Endstufe ist hier somit nicht als Halbbrücke nach dem Stand der Technik, sondern erfindungsgemäß als sog. komplementäre Sourcefolgerstufe ausgeführt.

Als Bezugspotential der Ansteuerung des Pulsweitenmodulators wird das Potential des Ausgangssignals der Halbbrücke gewählt. Dies hat im Allgemeinen keinerlei nachteilige Folgen, da die Steuergröße in sehr vielen Applikationen potentialgetrennt von der Sekundärseite auf die Primär- bzw. Netzseite übertragen wird. Mittels der erfinderischen Lösung kann somit auf den Einsatz eines Level- Shifters zur Pegelanpassung vollständig verzichtet werden.

Der erfinderische Gedanke wird anhand der Ausführungsbeispiele in den Figuren 1 bis 7 näher erläutert.
- Fig. 1: zeigt ein Schaltnetzteil in Halbbrückentopologie nach dem Stand der Technik.
- Fig. 2 und 3: zeigt Details der Primärseite eines Schaltnetzteils in Halbbrückentopologie nach dem Stand der Technik.
- Fig. 4: zeigt das Prinzip der erfinderischen Ausgestaltung des Pulsweitenmodulators.
- Fig. 5: zeigt den im Vergleich zur Schaltung nach Fig. 2 reduzierten Schaltungsaufwand eines erfinderischen Pulsweitenmodulators.
- Fig. 6: zeigt Simulationsergebnisse eines Pulsweitenmodulators nach Fig. 5
- Fig. 7: zeigt einen Aufbau eines Pulsweitenmodulators nach Fig. 5 mittels Standardbauelementen.
- Fig. 8: zeigt eine weitere Realisierungsvariante des Aufbaus eines Pulsweitenmodulators.

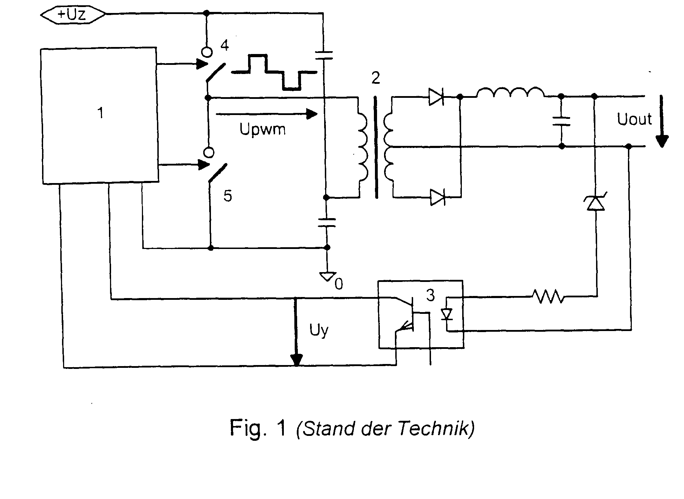

Fig. 1 zeigt das Blockschaltbild eines Schaltnetzteils in Halbbrückentopologie nach dem Stand der Technik. Die Gleichspannung U_{z} des Versorgungs- oder Zwischenkreises wird hierin mittels eines Pulsweitenmodulators (1) und der Leistungsschalter (4 und 5) zerhackt und an den Hochfrequenztransformator (2) angelegt. Der Pulsweitenmodulator (1) wird über eine galvanisch getrennte Regeleinrichtung (3), die als Optokoppler oder Übertrager ausgeführt sein kann, derart gesteuert, dass nach einer Glättung die gewünschte Ausgangsspannung Uₒᵤₜ anliegt. Als Stellgröße der Regeleinrichtung dient hierbei-die Spannung U_{y}. Die notwendige Treiberschaltung der Leistungsschalter (4 und 5) ist hier aus Gründen der Übersichtlichkeit nicht gezeichnet. Bei derartigen Halbbrückenschaltungen sind an die Ansteuerung der Schalter (4 und 5) folgende Anforderungen zu stellen:
- Beide Schalter, derjenige in TOP- Position (4) sowie derjenige in BOT- Position (5) müssen, gegenseitig verriegelt angesteuert werden, d.h. es darf zur Kurzschlussvermeidung immer nur einer der beiden Schalter geschlossen sein.
- Beide Schalter (4 und 5) müssen durch den Pulsweitenmodulator (1) mit variablem Tastverhältnis angesteuert werden um, durch die Regeleinrichtung (3) geeignet beeinflußt, die gewünschte Ausgangsspannung Uₒᵤₜ erzeugen zu können.
- Es muss ein Gleichlauf zwischen dem Tastverhältnis des TOP- Schalters (4) und dem Tastverhältnis des BOT- Schalters (5) gegeben sein, d.h. die Zeitdauer des geschlossenen Zustandes beider Schalter während eines Zykluses muss gleich sein.

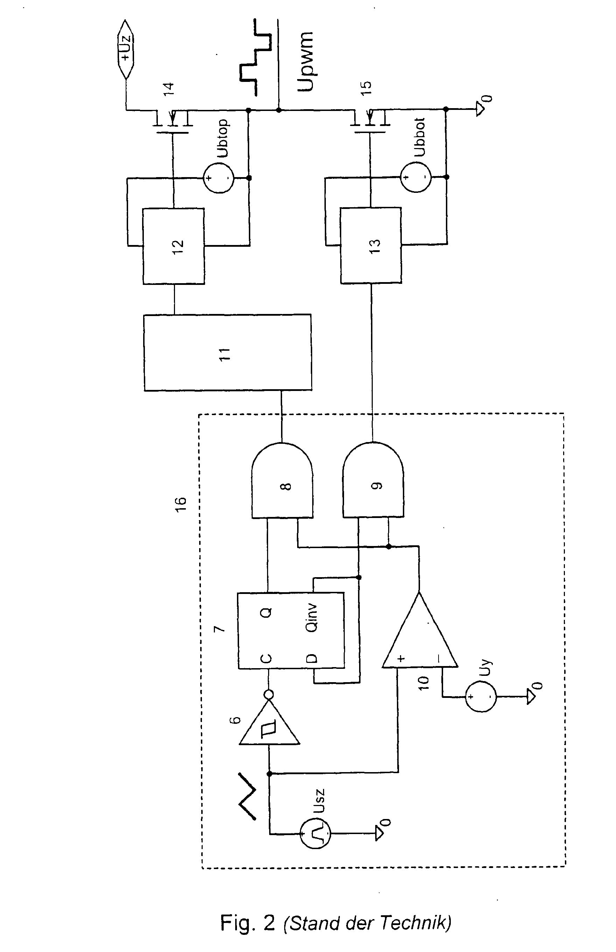

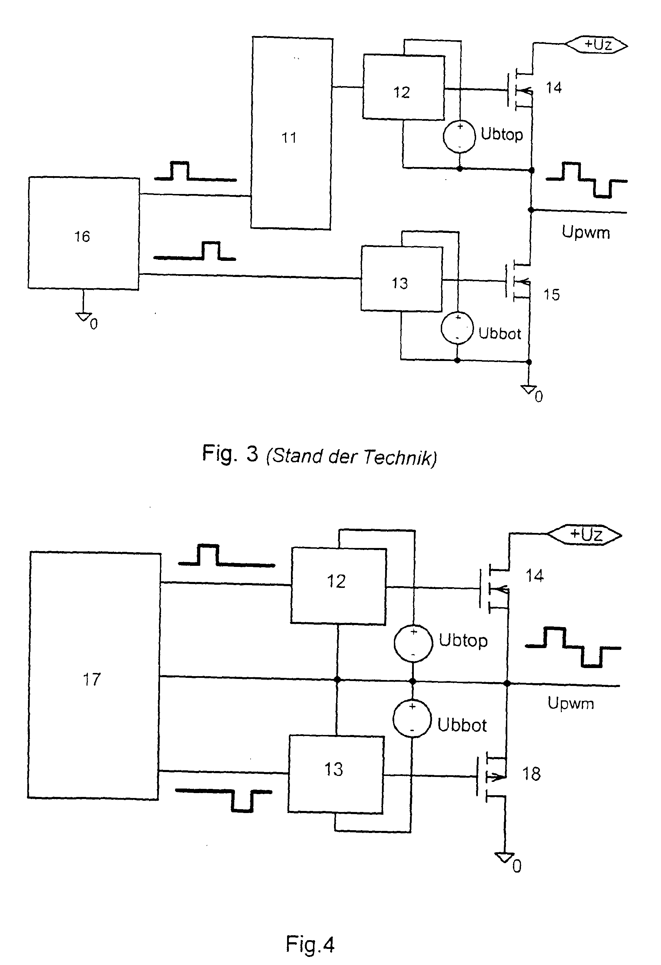

Fig. 2 und 3 zeigt die Ansteuerschaltung eines Halbbrückenwandlers nach dem Stand der Technik. Als Stellgröße der Regeleinrichtung ist hier zur vereinfachten Darstellung die Spannungsquelle U_{y} gezeigt. Die Ansteuerung (16) des Pulsweitenmodulators wird hier beispielhaft auf folgende Art realisiert:

Die Spannungsquelle U_{sz} erzeugt ein dreieck- oder sägezahnförmiges Ausgangssignal. Mittels des Komparators (10) wird die Spannung der Quelle U_{sz} mit der Stellspannng U_{y} verglichen. Das Ausgangssignal des Komparators (10) wird zwei UND- Gattern (8 und 9) zugeführt. Der Hysteresschalter (6) erzeugt aus der Spannung U_{sz} das Taktsignal für das D-Flip- Flop (7). Dieses rückgekoppelte D- Flip- Flop kippt bei jeder positiven Taktflanke von (6) um und gibt dadurch im Wechsel das erste (8) oder zweite (9) UND- Gatter frei. Auf diese Weise werden zwei getrennte gegeneinander verriegelte Signale für die Treiber (12 bzw. 13) der TOP- (14) bzw. BOT- (15) Schalter erzeugt.

Bei einer Versorgungs- bzw. Zwischenkreisspannung U_{z}, die größer als die Arbeitsspannung der Ansteuerung des Pulsweitenmodulators ist, muss zusätzlich noch eine Potentialanpassung (Level- Shift) (11) zur Ansteuerung des Treibers (12) des TOP-Schalters (14) eingesetzt werden.

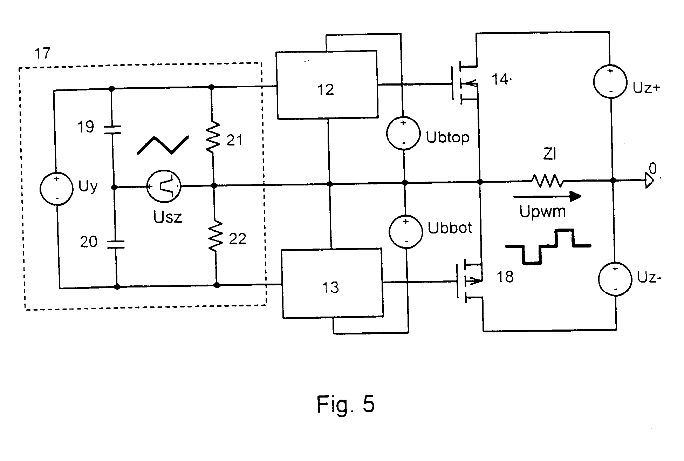

Fig. 4 zeigt das Prinzip der erfinderischen Ausgestaltung der Ansteuerung (17) des Pulsweitenmodulators sowie den Treibern (12 bzw. 13) der Leistungsschalter (14 bzw. 18). Anstelle der beim Stand der Technik für beide Leistungsschalter verwendeten N- Kanal-Transistoren wird erfinderisch der BOT- Schalter (18) durch einen P- Kanal- Transistor (hier ein P- Kanal- MOS- Transistor) realisiert. Durch diese Wahl und die Tatsache, daß das Bezugspotential der gesamten Ansteuerschaltung gleich dem Ausgangssignal der Halbbrücke gewählt wird, kann die Ansteuerschaltung des Pulsweitenmodulators im Vergleich zum Stand der Technik erheblich vereinfacht werden, wie dies in Fig. 5 beispielhaft dargestellt ist.

Die Spannung U_{y} als Stellgröße der Regeleinrichtung wird potentialgetrennt von der Sekundärseite des Schaltnetzteils auf die Primärseite übertragen, wie es beispielhaft auch in Fig.1. gezeigt ist. Daher ist zur Vereinfachung diese Stellgröße in Fig. 5 als Spannungsquelle U_{y} gezeichnet. Die erfinderische Ansteuerung des Pulsweitenmodulators wird realisiert durch eine Spannungsquelle U_{sz} sowie die passiven Bauelemente (19-22). Erfinderisch ist weiterhin die Ausgestaltung des BOT- Schalters (18) als Source- Folger. Das Bezugspotential der Ansteuerung entspricht dem wechselnden Potential des Ausgangssignals der Halbbrücke. Da, wie oben beschrieben, die Stellgröße U_{y} potentialgetrennt von der Sekundär- auf die Primärseite übertragen wird, stellt dies keinen Nachteil der erfinderischen Schaltung dar. Die Funktion wird im weiteren detailliert beschrieben.

Die Spannungsquelle U_{sz} liefert eine dreieckförmige Spannung. Diese wird über die beiden Kondensatoren (19, 20) gleichspannungsentkoppelt an die Steuereingänge der Treiberstufen (12, 13) gelegt. Derartige Treiberstufen weisen definierte Schaltschwellen auf. Falls die Steuerspannung am Eingang der Treiberstufe größer ist als die Schaltschwelle, so ist die Ausgangsspannung der Treiberstufe nahe ihrer positiven, sonst nahe ihrer negativen Versorgungsspannung. Die Treiberversorgungs- bzw. Ausgangsspannung ist ausreichend um die Transistoren (14, 18) geeignet zu schalten. Wenn U_{y} = 0V ist, dann liegen die Eingangsspannungen der beiden Treiberstufen (12, 13) auf identischem Potential. Wenn U_{sz} über dem Einschaltpotential des Treibers (12) in TOP- Position liegt, so legt dieser seine positive Versorgungsspannung an das Gate von Transistor (14) an, der Transistor schaltet ein. Zeitgleich liegt U_{sz} auch am Eingang des Treibers (13) in BOT- Position an, auch dieser schaltet seine positive Versorgungsspannung auf das Gate von Transistor (18). Die positive Versorgungsspannung des BOT- Treibers (13) ist gleich dem Sourcepotential des Transistors (18). Somit ergibt sich am Transistor (18) ein Source- Gate- Potential von ca. 0V, der BOT- Transistor (18) ist somit sicher ausgeschaltet. Sinkt U_{sz} unter die Schaltschwelle des TOP- Treibers (12), so schaltet dieser den Transitor (14) aus. Die dreieckförmige Spannung U_{sz} sinkt weiter bis die Schaltschwelle des BOT- Treibers (13) unterschritten wird. Somit legt der BOT- Treiber (13) seine negative Versorgungsspannung an das Gate des BOT- Transistors (18), dieser schaltet ein. Für die Zeitspanne in der U_{sz} zwischen den Schaltschwellen der Treiber (12) und (13) liegt, sind beide Schalter (14, 18) geschlossen. Die Größe von U_{sz} wird so gewählt, daß Ihr Maximalwert knapp über der Schaltschwelle des TOP- Treibers (12) und ihr Minimalwert knapp unter der Schaltschwelle des BOT- Treibers (13) liegt. Wenn U_{y} gleich 0V ist, wird sich daher ein Ausgangssignal der Halbbrücke mit sehr kleinem Tastverhältnis einstellen. Mit U_{y} größer Null wird ein Spannungsoffset auf die Eingänge addiert, der die Einschaltzeiten verlängert und somit das Tastverhältnis des Ausgangssignals der Halbbrücke vergrößert.

Ein Level- Shifter wird in der erfinderischen Ausgestaltung des Pulsweitenmodulators auch bei einer höheren Versorgungs- bzw. Zwischenkreisspannung U_{z}, verglichen mit der Arbeitsspannung nicht mehr benötigt. Die erfinderische Ausgestaltung ist keine klassische Halbbrücke, sondern eine komplementäre Sourcefolgerstufe. Da das Bezugspotential der Ansteuerschaltung gleich dem Ausgangssignal der Halbbrücke ist, kann der Level- Shifter entfallen.

Die gesamte Ansteuerschaltung besteht nur noch aus den Treiberstufen (12, 13) für die Leistungsschalter, der Dreieckspannungsquelle U_{sz}, sowie der Stellgröße Uy und einem sehr einfachen Netzwerk bestehend aus den passiven Bauelementen (19-22). Gatetreiber nach dem Stand der Technik besitzen definierte Schaltschwellen und eine ausreichend große Verstärkung und können somit die Funktion eines Komparators (vgl. (10) in Fig. 2) mit übernehmen. Durch den erfinderischen Pegelshiftmechanismus wird ein abwechselndes Einschalten des TOP- (14) sowie des BOT- (18) Transistors erreicht, ohne daß ein Flip-Flop oder eine Logikschaltung notwendig ist.

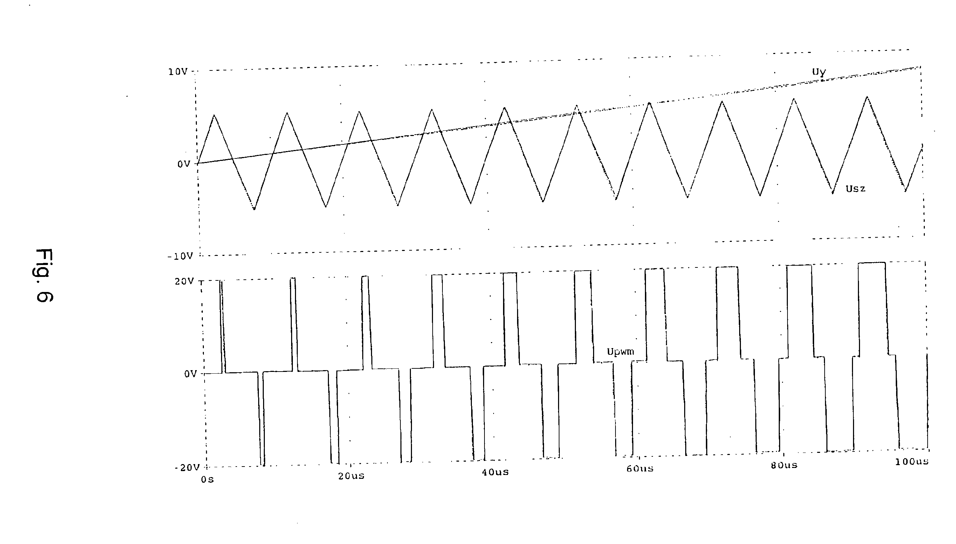

Fig. 6 zeigt Simulationsergebnisse des erfinderischen Pulsweitenmodulators aus Fig. 5. Im oberen Teil ist der zeitliche Verlauf der Dreieckspannung U_{sz} und der Stellgrößenspannung U_{y} dargestellt. Der untere Teil zeigt den Verlauf der Ausgangsspannung U_{PWM} der Ansteuerschaltung. Folgende Punkte konnten damit verifiziert werden:
- Durch Erhöhung der Stellspannung Uy vergrößert sich das Tastverhältnis der Ansteuersignale.
- Beide Signale sind, wie gefordert, gegeneinander verriegelt.
- Es besteht ein Gleichlauf der Tastverhältnisse zwischen TOP und BOT- Schalter.

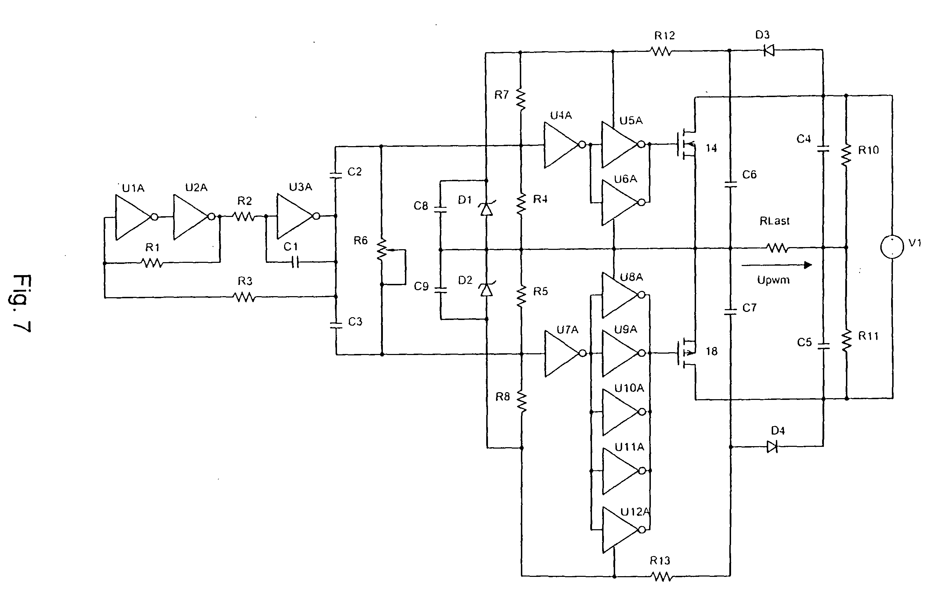

Fig. 7 zeigt einen Aufbau des erfinderischen Pulsweitenmodulators mittels Standardbauelementen. Für die Signalerzeugung und Verstärkung werden einfache CMOS-Inverter in einer "unbuffered"- Version eingesetzt, die nur aus einem komplementären Transitorpaar besteht. Durch diesen einfachen Aufbau stellt solch ein Inverter einen Tiefpaß niedriger Ordnung dar und kann daher auch im Linearbetrieb eingesetzt werden. So ist es möglich die Stufe U3A als Integrator zu betreiben. Gemeinsam mit U1A und U2A, die einen Komparator bilden, ist ein Oszillator aufgebaut, der eine dreieckförmige Ausgangsspannung liefert. Mit R6 kann das Tastverhältnis des Ausgangssignals U_{PWM} verändert werden. Ersetzt man R6 durch die Sekundärseite eines Optokopplers, so kann das Tastverhältnis der Spannung Upwm potentialgetrennt über einen Strom bzw. eine Spannung gesteuert werden, wie dies beispielsweise bei eine primärgetaktetem Schaltnetzteil (Fig. 1) notwendig ist. U4A - U6A treiben den N- Kanal- MOS- Transistor in TOP- Position und U7A bis U12A treiben den P- Kanal- MOS- Transistor in BOT- Position. Die Stromversorgung der Ansteuerschaltung erfolgt über einen doppelten Ladungspumpenmechanismus rund um D3, D4, C6, C7.

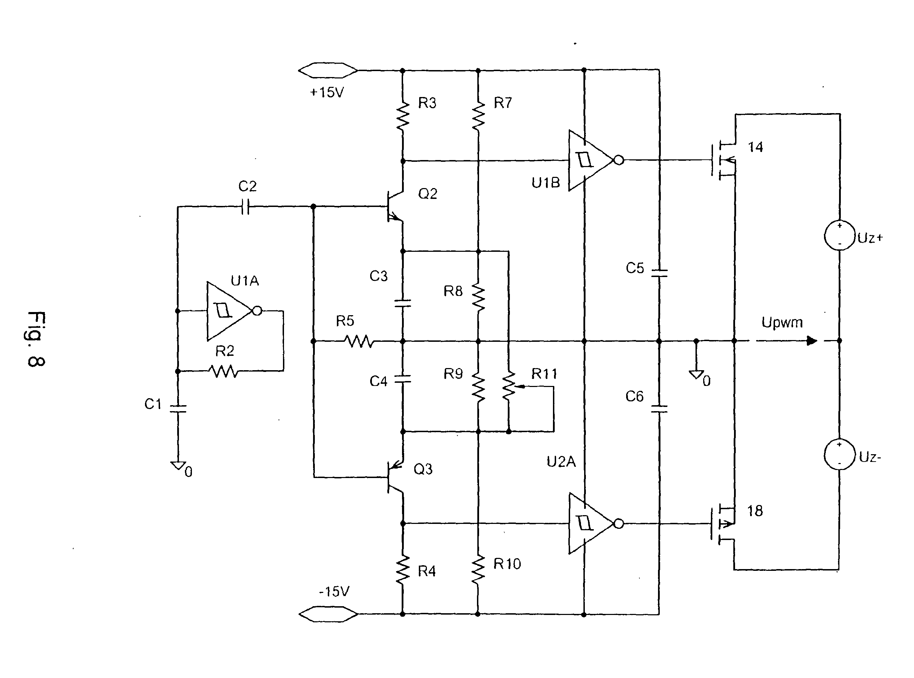

Fig. 8 zeigt eine weitere Realisierungsvariante. Die hier verwendeten Inverter weisen ein Hystereseschaltverhalten auf. Mit dem Inverter U1A ist ein Oszillator aufgebaut. Das verriegelte PWM- Signal wird in dieser Variante durch eine komplementäre Transistorstufe (Q1, Q2) erzeugt, die in Class- C- Einstellung betrieben wird. Je stärker die negative Vorspannung des C- Betriebes, hier zur Vereinfachung durch das Potentiometer R11 dargestellt, eingestellt wird, umso größer wird die Verriegelungszeit zwischen dem Einschaltsignal für den TOP und den BOT- Schalter. Das Schaltsignal für den TOP- (bzw. BOT-) Transistor wird am Kollektor von Q1 (bzw. Q2) ausgekoppelt und durch U2A (bzw. U3A) in ein Schaltsignal mit hoher Flankensteilheit verwandelt. Diese Variante weist vor allem folgende Vorteile auf:
- hohe Störsicherheit durch die Verwendung von Gatterstufen mit Hystereseschaltverhalten
- sichere Verriegelung zwischen dem PWM- Signal für den TOP- und BOT- Transistor
- extrem kostengünstige Realisierung eines PWM für hohe Zwischenkreisspannungen
- geringer Bauteilebedarf.

Das Tastverhältnis der PWM- Signale wird zu Simulationszwecken hier durch das Potentiometer POT eingestellt. Ersetzt man Pot (R11) durch die Sekundärseite eines Optokopplers, so kann das Tastverhältnis der Spannung Upwm potentialgetrennt über einen Strom bzw. eine Spannung gesteuert werden, wie dies beispielsweise bei einem primärgetakteten Schaltnetzteil (Fig. 1) notwendig ist.

## Patentansprüche

1. Schaltender Spannungsumformer in Halbbrückentopologie mit variabler Verriegelung bestehend aus zwei Leistungsschaltern, einem Stellglied sowie einer Ansteuerung, wobei der TOP- Schalter (4) durch einen oder mehrere N- Kanal Transistoren (14) realisiert ist, der BOT- Schalter (5) durch einen oder mehrere P- Kanal Transistoren (18) realisiert ist, sowie der Ausgang Upwm der Halbbrücke als im Betrieb variierendes, nicht konstantes, Bezugspotential für Ansteuerung (17) und Versorgungsspannung (Ubtop, Ubbot) der jeweiligen Treiber (12, 13) des TOP- bzw. BOT- Schalters gewählt wird.

2. Schaltender Spannungsumformer nach Anspruch 1, **dadurch gekennzeichnet, dass**
auch bei einer Versorgungs- bzw. Zwischenkreisspannungen U_{z} größer als die Arbeitsspannung des Pulsweitenmodulators keine Pegelanpassung mittels eines Level-Shifters notwendig ist.

3. Schaltender Spannungsumformer nach Anspruch 1, **dadurch gekennzeichnet, dass**
als Leistungsschalter (14, 18) Bipolar-, IGBT oder MOS- Transistoren eingesetzt werden.

4. Schaltender Spannungsumformer nach Anspruch 1, **dadurch gekennzeichnet, dass**
das Ansteuersignal aus einem Pulsweitenmodulator mit einer Spannungsquelle U_{sz} mit dreieckigem Spannungsverlauf gewonnen wird.

5. Schaltender Spannungsumformer nach Anspruch 1, **dadurch gekennzeichnet, dass**
zur Regelung des Ansteuersignals eine mittels Optokoppler oder Übertrager (3) aus dem Ausgangssignal Uₒᵤₜ des Umformers gewonnenen Spannung U_{y} verwendet wird.
